# EUROPÄISCHE PATENTSCHRIFT

(11) **EP 3 523 119 B1**
(45) Veröffentlichungstag und Bekanntmachung des Hinweises auf die Patenterteilung: **13.04.2022**
(21) Anmeldenummer: 17743037.8
(22) Anmeldetag: 25.07.2017
(51) Int. Cl.: B29D 30/72

(54) **VERFAHREN ZUR HERSTELLUNG EINES FAHRZEUGREIFENS**
METHOD FOR PRODUCING A VEHICLE TYRE
PROCÉDÉ DE FABRICATION D'UN PNEU DE VÉHICULE

(30) Priorität: 07.10.2016 DE 102016219472
(43) Veröffentlichungstag der Anmeldung: 14.08.2019
(73) Patentinhaber: Continental Reifen Deutschland GmbH, 30165 Hannover (DE)
(72) Erfinder: BECHERER, Thomas, 30938 Burgwedel (DE)
(74) Vertreter: Continental Corporation
(86) Internationale Anmeldenummer: PCT/EP2017/068731
(87) Internationale Veröffentlichungsnummer: WO 2018/065135

(56) Entgegenhaltungen:
- EP-A1- 2 905 125
- EP-A1- 2 977 934
- WO-A1-2005/000714
- WO-A1-2015/165863
- DE-A1-102007 028 933

## Beschreibung

Die Erfindung betrifft ein Verfahren zur Herstellung eines Fahrzeugreifens.

Es ist bekannt, den Fahrzeugreifen nach der Reifenproduktion mit einer Markierung oder einem visuellen Code zu versehen. Das Aufbringen des Codes erfolgt im Allgemeinen durch ein Einprägen in einen fertig hergestellten Fahrzeugreifen. Das Aufbringen des Codes ist i.a. nur mit einem hohen Herstellungsaufwand möglich.

Gemäß WO 2015/165863 A1, WO 2005/000714 A1 und DE 10 2007 028 933 A1 ist jeweils vorgesehen, bei der Herstellung des Fahrzeugreifens sichtbare Codes mit Informationen im Bereich der Seitenwand des Fahrzeugreifens aufzubringen.

Der Erfindung liegt die Aufgabe zugrunde, ein verbessertes Verfahren zur Herstellung von Fahrzeugreifen bereitzustellen.

Insbesondere soll die Zykluszeit zum Aufbringen eines QR-Codes auf dem Fahrzeugreifen reduziert werden.

Gelöst wird die Aufgabe gemäß Anspruch 1 dadurch, dass ein Verfahren mit folgenden Schritten eingesetzt wird:
a) Bereitstellen eines unvulkanisierten Reifenrohlings,
b) Vulkanisieren des Reifenrohlings mit einer Vulkanisationsvorrichtung,
wobei die Vulkanisationsvorrichtung zumindestens ein Formsegment umfasst mit dem im Bereich der Seitenwand des Fahrzeugreifens ein erster visuell sichtbarer Code aufgebracht wird, wobei der Code eine Vielzahl von artikelspezifischen Informationen für den hergestellen Fahrzeugreifen beinhaltet,
c) Entnahme des vulkanisierten Fahrzeugreifens aus der Vulkanisationsvorrichtung,
d) Bereitstellen des vulkanisierten Fahrzeugreifens an einer Vorrichtung zum Eingravieren eines zweiten visuell sichtbaren Codes,
e) Eingravieren des zweiten visuell sichtbaren Codes auf einen Bereich der Außenseite des Fahrzeugreifens,

wobei der zweite visuell sichtbare Code eine Vielzahl von reifenindividuellen Informationen für den hergestellen Fahrzeugreifen beinhaltet,
wobei die reifenindividuellen Informationen für jeden hergestellten Fahrzeugreifen unterschiedlich sind,
f) Fertigstellen des Fahrzeugreifens mit weiteren Schritten.

Ein Vorteil der Erfindung ist insbesondere darin zu sehen, dass durch das Verfahren die Herstellung von Fahrzeugreifen verbessert wird.

Außerdem wird mit dem Verfahren die Zykluszeit zur Herstellung der Fahrzeugreifen wesentlich verkürzt.

Diese Verkürzung der Zykluszeit wird dadurch erreicht, dass die Vielzahl von artikelspezifischen Informationen, z.B. die Reifengröße und der Reifentyp beim Vulkanisieren des Fahrzeugreifen auf die Seitenwand des Fahrzeugreifens aufgeprägt wird. Die reifenindividuellen Informationen, wie beispielsweise die Seriennummer des Fahrzeugreifens werden erst nach der Reifenvulkanisation mit dem zweiten visuell sichtbaren Code auf einen Bereich der Außenseite des Fahrzeugreifens aufgebracht. Die reifenindividuellen Informationen sind im Allgemeinen in der Anzahl geringer als die artikelspezifischen Informationen eines Fahrzeugreifens. Dadurch wird die Zykluszeit zum Aufbringen des zweiten visuell sichtbaren Codes wesentlich reduziert gegenüber herkömmlichen Verfahren zum Aufbringen eines Codes.

Erfindungsgemäß ist vorgesehen, dass der erste und zweite Code in Form eines zusammengesetzten QR-Codes auf einen Bereich der Seitenwand des Fahrzeugreifens aufgebracht wird.

Der zusammengesetzte QR-Code lässt sich auf einfache Weise mit einer Kamera und einer entsprechenden Software abfotographieren und auslesen.

Erfindungsgemäß ist vorgesehen, dass der erste Code auf einem ersten Teilbereich des QR-Codes auf dem Formsegment aufgebracht wird,
wobei der zweite Code bei Schritt e) im zweiten Teilbereich des QR-Codes aufgebracht wird.

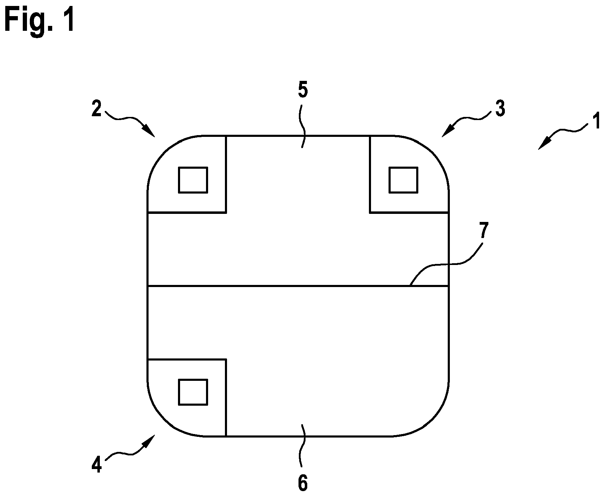

Ein entsprechendes Ausführungsbeispiel ist in der Fig. 1 dargestellt. Der erste Code wird im ersten oberen Teilbereich des QR-Codes mit dem Formsegment aufgebracht, wobei der untere Teil des QR-Codes leergelassen wird.

Nach der Vulkanisation wird der zweite Code im zweiten unteren Teilbereich des QR-Codes aufgebracht, beispielsweise mittels einer Lasergravur.

In einer nicht beanspruchten alternativen Weiterbildung ist vorgesehen, dass der erste Code in Form eines QR-Code auf einen Bereich der Seitenwand des Fahrzeugreifens aufgebracht wird, wobei der zweite Code in Form eines Barcodes neben dem QR-Code aufgebracht wird.

Bei diesem Ausführungsbeispiel wird der zweite Code in Form eines zweidiminsionalen Barcodes nehmen dem QR-Code aufgebracht. Bei dieser Ausführung wird ebenfalls Zykluszeit beim Aufbringen des zweiten Codes eingespart, da der zweite Code insgesamt weniger Informationen enthält.

In einer weiteren vorteilhaften Weiterbildung der Erfindung ist vorgesehen, dass bei Schritt e) das Eingravieren des zweiten Codes mit einer Lasergravur erfolgt.

Mit einer Lasergravur lassen sich mit einer hohen Prozessgeschwindigkeit entsprechende Vertiefungen zur Ausbildung des QR-Codes einbrennen bzw. eingravieren.

In einer weiteren vorteilhaften Weiterbildung der Erfindung ist vorgesehen, dass bei Schritt b) die artikelspezifischen Informationen für den hergestellen Fahrzeugreifen zumindestens Informationen zur Reifengröße und zum Reifentyp umfassen.

Diese artikelspezifischen Informationen sind für alle Fahrzeugreifen, die mit einer speziellen Vulkanisationsform hergestellt werden, immer gleich.

In einer weiteren vorteilhaften Weiterbildung der Erfindung ist vorgesehen, dass bei Schritt e) die reifenspezifischen Informationen für den hergestellen Fahrzeugreifen zumindestens Informationen zur Seriennummer des Fahrzeugreifens umfassen.

Diese reifenspezifischen Informationen sind für jeden Fahrzeugreifen unterschiedlich.

In einer weiteren vorteilhaften Weiterbildung der Erfindung ist vorgesehen, dass der QR-Code zumindestens Informationen zum Herstellungsdatum des Fahrzeugreifens, zum produzierenden Reifenwerk und zum Fahrzeughersteller, für den der Fahrzeugreifen bestimmt ist, umfasst.

Dadurch werden mit dem QR-Code alle wichtigen Informationen zu einem Fahrzeugreifen auf einfache Weise bereit gestellt.

Anhand eines Ausführungsbeispieles soll die Erfindung näher erläutert werden. Es zeigt:
- Fig. 1 :: einen QR-Code

Die Fig.1 zeigt schematisch einen QR-Code.

Der Fahrzeugreifen wird mit einem herkömmlichen Herstellungsverfahren produziert, wobei bei der Reifenvulkanisation mit einem Formsegment ein erster Teilbereich eines QR-Codes an einer Stelle der Seitenwand des Fahrzeugreifens aufgebracht wird.

Bei der Reifenvulkanisation wird mit einem Formsegment, beispielsweise auf den ersten obere Teilbereich 5, auf einer Stelle an der Seitenwand des Fahrzeugreifens ein erster visueller Code aufgebracht. Der erste visuelle Code enthält die artikelspezifischen Informationen für den Fahrzeugreifen, wie beispielsweise die Reifengröße oder den Reifentyp. Bei der Vulkanisation wird der zweite untere Teilbereich 6 des QR-Codes leergelassen, um später nach der Vulkanisation einen zweiten visuellen Code aufbringen zu können. Mit dem Formsegment werden bei der Reifenvulkanisation ebenfalls die Positionsmarkierungen 2, 3 und 4 auf die Seitenwand aufgeprägt. Diese Positionsmarken können unter anderem dazu dienen, das Einprägen des zweiten visuellen Codes zu vereinfachen. Nach der Reifenvulkanisation wird der Fahrzeugreifen an einer Vorrichtung bereitgestellt, die den zweiten visuellen Code auf den Fahrzeugreifen aufbringt. Der zweite visuelle Code wird mit einer Lasergravur im zweiten unteren Teilbereich 6 des QR-Codes 1 eingraviert. Auf diese Weise erhält man einen zusammengesetzten QR-Code aus einem ersten oberen Teilbereich 5 und einem zweiten unteren Teilbereich 6. Die Teilungslinie 7 zeigt die Grenze zwischen dem ersten und dem zweiten Teilbereich 5 und 6. Diese Teilungslinie 7 könnte ebenfalls diagonal durch den QR-Code verlaufen. Ein wesentlicher Vorteil bei diesem Herstellungsverfahren besteht darin, dass die Lasergravur für den zweiten Code mit den reifenindividuellen Informationen wesentlich weniger Zeit benötigt als die Lasergravur des gesamten Codes, der sich aus dem ersten und dem zweiten Code zusammensetzt. Bei einem weiteren Ausführungsbeispiel würde der zweite Code mit den reifenindivuduellen Informationen in Form eines Barcodes auf den Reifen aufgebracht werden. Der erste Code mit den artikelspezifischen Informationen würde bei dieser Ausführung mit einem kompletten QR-Code bei der Reifenvulkanisation auf die Seitenwand aufgebracht werden. Weitere artikelspezifische Informationen für einen Fahrzeugreifen sind insbesondere der Geschwindigkeitsindex, die Traglast für den Fahrzeugreifen oder die Information, ob es sich um einen Sommer- oder um einen Winterreifen handelt. Zu den reifenindividuellen Informationen zählen außerdem das Herstellungsdatum für den Fahrzeugreifen. Die reifenindividuellen Informationen haben einen Anteil von weniger als 30% bis 40% bezogen auf die Summe von artikelspezifischen und reifenindividuellen Informationen.

Die Informationen, die auf dem QR-Code enthalten sind, können auf einfache Weise mit einer Kamera vom Fahrzeughersteller von Werkstätten oder von Endkunden ausgelesen werden.

### Bezugszeichenliste

### (ist Teil der Beschreibung)

- 1: QR-Code
- 2: Positionsmarkierung
- 3: Positionsmarkierung
- 4: Positionsmarkierung
- 5: Erster oberer Teilbereich des QR-Codes, wobei in diesem Teilbereich der erste visuelle Code mit den Formsegmenten aufgeprägt ist
- 6: Zweiter unterer Teilbereich des QR-Codes, wobei in diesem Teilbereich der zweite visuelle Code nachträglich eingraviert ist
- 7: Teilungslinie zwischen dem ersten und zweiten Teilbereich

## Patentansprüche

1. Verfahren zur Herstellung eines Fahrzeugreifens mit folgenden Schritten:
a) Bereitstellen eines unvulkanisierten Reifenrohlings,
b) Vulkanisieren des Reifenrohlings mit einer Vulkanisationsvorrichtung,
wobei die Vulkanisationsvorrichtung zumindestens ein Formsegment umfasst mit dem im Bereich der Seitenwand des Fahrzeugreifens ein erster visuell sichtbarer Code aufgebracht wird,
wobei der Code eine Vielzahl von artikelspezifischen Informationen für den hergestellen Fahrzeugreifen beinhaltet,
c) Entnahme des vulkanisierten Fahrzeugreifens aus der Vulkanisationsvorrichtung,
d) Bereitstellen des vulkanisierten Fahrzeugreifens an einer Vorrichtung zum Eingravieren eines zweiten visuell sichtbaren Codes,
e) Eingravieren des zweiten visuell sichtbaren Codes auf einen Bereich der Außenseite des Fahrzeugreifens,
wobei der zweite visuell sichtbare Code eine Vielzahl von reifenindividuellen Informationen für den hergestellen Fahrzeugreifen beinhaltet,
wobei die reifenindividuellen Informationen für jeden hergestellten Fahrzeugreifen unterschiedlich sind,
wobei der erste und zweite Code in Form eines zusammengesetzten QR-Codes (1) auf einen Bereich der Seitenwand des Fahrzeugreifens aufgebracht wird, wobei der erste Code auf einem ersten Teilbereich (5) des QR-Codes (1) aufgebracht wird und der zweite Code bei Schritt e) im zweiten Teilbereich (6) des QR-Codes (1) aufgebracht wird,
f) Fertigstellen des Fahrzeugreifens mit weiteren Schritten.

2. Verfahren nach einem der vorhergehenden Ansprüche,
**dadurch gekennzeichnet, dass**
bei Schritt e) das Eingravieren des zweiten Codes mit einer Lasergravur erfolgt.

3. Verfahren nach einem der vorhergehenden Ansprüche,
**dadurch gekennzeichnet, dass**
bei Schritt b) die artikelspezifischen Informationen für den hergestellen Fahrzeugreifen zumindestens Informationen zur Reifengröße und zum Reifentyp umfassen.

4. Verfahren nach einem der vorhergehenden Ansprüche,
**dadurch gekennzeichnet, dass**
bei Schritt e) die reifenspezifischen Informationen für den hergestellen Fahrzeugreifen zmindestens Informationen zur Seriennummer des Fahrzeugreifens umfassen.

## Claims

1. Method for producing a vehicle tyre with the following steps:
a) providing an unvulcanized green tyre,
b) vulcanizing the green tyre by a vulcanizing apparatus, the vulcanizing apparatus comprising at least one mould segment by means of which a first visually visible code is applied in the region of the sidewall of the vehicle tyre, the code comprising a multiplicity of article-specific items of information for the produced vehicle tyre,
c) removing the vulcanized vehicle tyre from the vulcanizing apparatus,
d) providing the vulcanized vehicle tyre at an apparatus for engraving a second visually visible code,
e) engraving the second visually visible code onto a region of the outer side of the vehicle tyre,
the second visually visible code comprising a multiplicity of tyre-specific items of information for the produced vehicle tyre,
the tyre-specific items of information being different for each produced vehicle tyre,
the first and second codes being applied in the form of a composite QR code (1) to a region of the sidewall of the vehicle tyre, the first code being applied on a first subregion (5) of the QR code (1) and the second code being applied in step e) in the second subregion (6) of the QR code (1),
f) finishing the vehicle tyre by further steps.

2. Method according to one of the preceding claims,
**characterized in that**
in step e), the engraving of the second code is performed by laser engraving.

3. Method according to one of the preceding claims,
**characterized in that**
in step b), the article-specific items of information for the produced vehicle tyre comprise at least items of information concerning the tyre size and the tyre type.

4. Method according to one of the preceding claims,
**characterized in that**
in step e), the tyre-specific items of information for the produced vehicle tyre comprise at least items of information concerning the serial number of the vehicle tyre.

## Revendications

1. Procédé de fabrication d'un pneumatique de véhicule, comprenant les étapes suivantes consistant à :
a) prévoir un pneumatique cru non vulcanisé,
b) vulcaniser le pneumatique cru à l'aide d'un dispositif de vulcanisation,
le dispositif de vulcanisation comprenant au moins un segment de moule par lequel un premier code visuellement apparent est appliqué au niveau du flanc du pneumatique de véhicule,
le code contenant une pluralité d'informations spécifiques à un article pour le pneumatique de véhicule fabriqué,
c) retirer le pneumatique de véhicule vulcanisé du dispositif de vulcanisation,
d) fournir le pneumatique de véhicule vulcanisé à un dispositif permettant de graver un deuxième code visuellement apparent,
e) graver le deuxième code visuellement apparent sur une zone de la face extérieure du pneumatique de véhicule,
le deuxième code visuellement apparent contenant une pluralité d'informations individuelles d'un pneumatique pour le pneumatique de véhicule fabriqué,
les informations individuelles d'un pneumatique étant différentes pour chaque pneumatique de véhicule fabriqué,
le premier et le deuxième code étant appliqués sous la forme d'un code QR composé (1) sur une zone du flanc du pneumatique de véhicule, le premier code étant appliqué sur une première zone partielle (5) du code QR (1) et le deuxième code étant appliqué à l'étape e) dans la deuxième zone partielle (6) du code QR (1),
f) finaliser le pneumatique de véhicule par des étapes supplémentaires.

2. Procédé selon l'une quelconque des revendications précédentes, **caractérisé en ce qu'**à l'étape e), la gravure du deuxième code est effectuée par une gravure au laser.

3. Procédé selon l'une quelconque des revendications précédentes, **caractérisé en ce qu'**à l'étape b), les informations spécifiques à un article pour le pneumatique de véhicule fabriqué comprennent au moins des informations sur la taille de pneumatique et le type de pneumatique.

4. Procédé selon l'une quelconque des revendications précédentes, **caractérisé en ce qu'**à l'étape e), les informations spécifiques à un pneumatique pour le pneumatique de véhicule fabriqué comprennent au moins des informations sur le numéro de série du pneumatique de véhicule.
